Europäisches Patentamt

(19) European Patent Office

Office européen des brevets

(11) Publication number: **0 066 012**
**A1**

(12) **EUROPEAN PATENT APPLICATION**

(21) Application number: **81200592.4**

(22) Date of filing: **01.06.81**

(51) Int. Cl.³: **D 03 D 47/30**
**B 23 P 15/16**

(43) Date of publication of application:
**08.12.82 Bulletin 82/49**

(84) Designated Contracting States:
**BE CH DE FR GB IT LI NL**

(71) Applicant: **N.V. WEEFAUTOMATEN PICANOL**
**Polenlaan 3-7**
**B-8900 Ieper(BE)**

(72) Inventor: **Dewilde, Walther André**
**Robrecht van Bethunelaan 174**
**B-8900 Ieper(BE)**

(74) Representative: **Bockstael, Daniel**
**M.F.J. Bockstael Arenbergstraat 13**
**B-2000 Anvers(BE)**

(54) Process for the manufacture of auxiliary nozzles for pneumatic looms and the thus obtained auxiliary nozzles.

(57) Process for the manufacture of auxiliary nozzles (3) for pneumatic weaving looms according to which a small cylindrical tube is locally pressed together and subsequently is provided with an outlet opening, characterized thereby that the length of the starting tube (1) is substantially twice that of the nozzle (3) to be obtained, wherein the operation of pressing together takes place in the middle of the starting tube (1) and obliquely with respect to its longitudinal axis, and wherein the tube (1) pressed together is then cut through according to the oblique line of pressing together so as to obtain two auxiliary nozzles (3).

Fig. 4

1

"Process for the manufacture of auxiliary nozzles for pneumatic looms and the thus obtained auxiliary nozzles."

This invention relates to a process for the manufacture of auxiliary nozzles for pneumatic looms as well as to the auxiliary nozzles obtained by the application of this process.

It is generally known in pneumatic looms to blow the woof into the gap by means of a main nozzle and to transport it through the gap by means of a number of auxiliary nozzles mounted on the drawer or the like, mostly between laminations of a guiding channel.

Each of such auxiliary nozzles is manufactured as a stud-shaped blowing tube with closed top and shows a lateral air outlet which is directed to the guiding channel. Such an arrangement is described, e.g., in the following patents and patent applications : US Patent No 3.821.972 - Dutch Patent Application No 79 01566 - European Patents No 0019418 and No 0021128, British Patent No 2.050.443, etc.

The manufacture of such auxiliary nozzles is relatively time-consuming and expensive. In Swiss Patent No 610.222, e.g. the manufacture of an auxiliary nozzle is described, wherein one starts from a small tube that is subjected to the following operations :

1) pressing flat one extremity of the tube;
2) joining the pressed together tube parts;

3) drilling out a blowing opening.

The object of the present invention is to provide simple process according to which auxiliary nozzles can be made quickly and cheaply.

According to the present invention this object is realized by the application of a process according to which a small cylindrical tube is localy pressed together and subsequently is provided with an outlet opening, characterized thereby the length of the starting tube is substantially twice that of the nozzle to be obtained, wherein the operation of pressing together takes place in the middle of the starting tube and obliquely with respect to its longitudinal axes, and wherein the tube pressed together is cut through according to the oblique line of pressing together so as to obtain two auxiliary nozzles.

In comparison with the prior art as describd, e.g. in the above-mentioned Swiss Patent No 610.222 the present invention shows the advantage that not only two auxiliary nozzles are made simultaneously, but also that joining the pressed together wall parts, e.g. by welding, brazing, pressure-welding and the like, becomes completely superfluous.

For clarity's sake an embodiment is described hereinafter with reference to the accompanying drawings wherein :

Figure 1 represents a cylindrical small tube taken as starting point for the application of the process according to the present invention;
Figure 2 represents the tube according to Figure 1 after the first phase of the above-mentioned process has been carried out;
Figure 3 represents a section according to line III-III of Figure 2;
Figure 4 represents one of the two auxiliary nozzles after a further working up of the tube according to Figure 2; and

Figure 5 represents a section made according to line V-V of Figure 4.

According to the present invention one starts from a small tube 1 with circular section and whose length substantially equals twice the length of the auxiliary nozzle to be obtained.

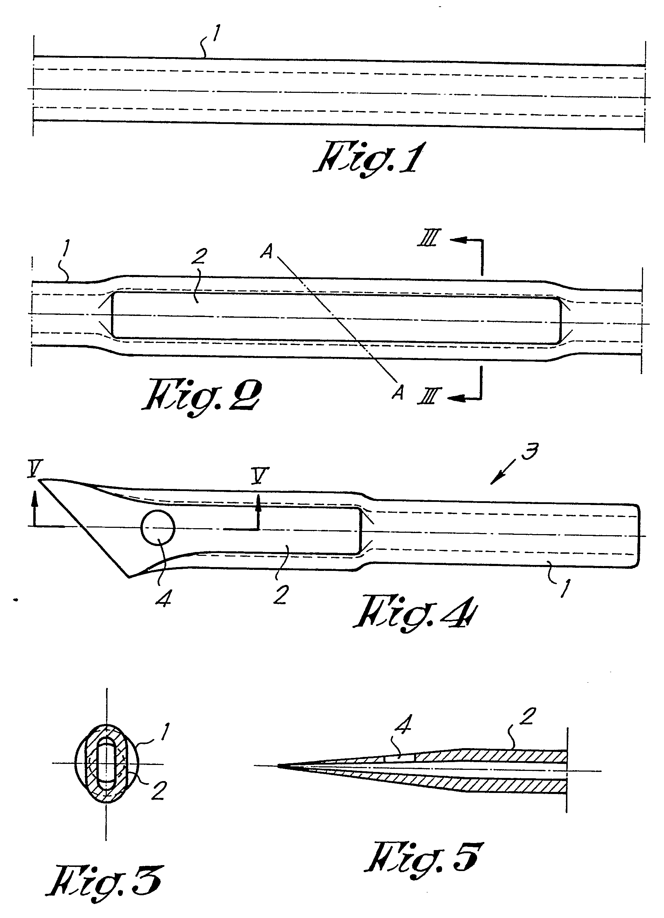

Then the tube 1 is flattened in its central zone 2 to an oval section (Figures 2 and 3).

The tube is now crushed in the middle of zone 2 according to a line A-A following an oblique path with respect to the longitudinal axis of tube 1.

The thus deformed tube 1 is now cut according to line A-A which yields two auxiliary nozzles 3 according to Figure 4.

It should be noticed that the formation of zone 2 and the subsequent operations of crushing and cutting through according to line A-A can be realized during one and the same cycle of operations if a punch suited for that purpose is used.

In one of the sharpened wall parts of the auxiliary nozzle 3 an air outlet opening 4 is now drilled.

The above-described deformation of tube 1 before it is cut through provides for a good contact between the wall parts pressed together in the zone of line A-A.

Hereby is meant that at most a nearly microscopic slit persists between the afore-mentioned wall parts.

A further treatment of the auxiliary nozzles in a known vibrating mill containing suitably chosen balls provides not only for a perfectly smooth surface but also for a complete hammering up the microscopic slit that was left after the previous operations.

So, it is clear that the invention provides an especially economical process for the industrial manufacture of auxiliary nozzles.

Claims.

1.- Process for the manufacture of auxiliary nozzles for pneumatic weaving looms according to which a small cylindrical tube is locally pressed together and subsequently is provided with an outlet opening, characterized thereby that the length of the starting tube (1) is substantially twice that of the nozzle (3) to be obtained, wherein the operation of pressing together takes place in the middle of the starting tube (1) and obliquely with respect to its longitudinal axis, and wherein the tube (1) pressed together is then cut through according to the oblique line of pressing together so as to obtain two auxiliary nozzles (3).

2.- Process according to claim 1, characterized thereby that the starting tube (1) before being pressed together obliquely first in its central zone (2) is pressed to an oval transversal section.

3.- Process according to claim 2, characterized thereby that the operations of pressing to an oval section, obliquely pressing together and cutting through of the small tube are carried out in one and the same cycle.

4.- Process according to any of the foregoing claims, characterized thereby that surface cleaning and sealing of the slit occasionally left at the top of the auxiliary nozzle take place in one cycle, viz. in a vibrating mill containing suitably chosen balls.

*Fig.1*

*Fig.2*

*Fig.4*

*Fig.3*

*Fig.5*

0066012

European Patent
Office

**EUROPEAN SEARCH REPORT**

Application number

EP 81 20 0592

| DOCUMENTS CONSIDERED TO BE RELEVANT | | | CLASSIFICATION OF THE APPLICATION (Int. Cl. ³) |
|---|---|---|---|
| Category | Citation of document with indication, where appropriate, of relevant passages | Relevant to claim | |
| | GB - A - 810 702 (EISENWERK-GESELLSCHAFT MAXIMILIANSHUTTE) <br><br> * the whole document * <br><br> -- | 1 | D 03 D 47/30 <br> B 23 P 15/16 |
| D | CH - A - 610 222 (RUTI) <br><br> * the whole document * <br><br> -- | 1 | |
| A | GB - A - 2 070 650 (RUTI) <br><br> * figures; claims * <br><br> -- | | **TECHNICAL FIELDS SEARCHED (Int.Cl.³)** <br><br> D 03 D <br> B 23 P |
| A | FR - A - 2 272 207 (RUTI) <br><br> * figures; claims * <br><br> -------- | | |

CATEGORY OF CITED DOCUMENTS

X: particularly relevant if taken alone
Y: particularly relevant if combined with another document of the same category
A: technological background
O: non-written disclosure
P: intermediate document
T: theory or principle underlying the invention
E: earlier patent document, but published on, or after the filing date
D: document cited in the application
L: document cited for other reasons

&: member of the same patent family, corresponding document

The present search report has been drawn up for all claims

| Place of search | Date of completion of the search | Examiner |
|---|---|---|
| The Hague | 27-01-1982 | BOUTELEGIER |

EPO Form 1503.1  06.78